# DEMANDE DE BREVET EUROPEEN

(11) **EP 3 367 147 A1**
(43) Date de publication de la demande: **29.08.2018**
(21) Numéro de dépôt: 17157509.5
(22) Date de dépôt: 23.02.2017
(51) Int. Cl.: G02B 6/42, G02B 6/43

(54) **PLATEFORME OPTIQUE NON TRANSPARENTE AU RAYONNEMENT PHOTONIQUE ET PROCEDE POUR LA FIXATION DE COMPOSANTS OPTIQUES NON TRANSPARENTS AU RAYONNEMENT PHOTONIQUE SUR UNE TELLE PLATEFORME**

(71) Demandeur: Nokia Solutions and Networks Oy, 02610 Espoo (FI)
(72) Inventeur: CHARBONNIER, Philippe, 91767 Palaiseau (FR); MALLECOT, Franck, 91767 Palaiseau (FR); GARIAH, Harry, 91767 Palaiseau (FR)
(74) Mandataire: Berthier, Karine

(57) **Abrégé**

Une plateforme optique non-transparente au rayonnement photonique a une surface destinée à supporter au moins un composant optique non-transparent au rayonnement photonique. Sa surface comporte au moins deux gouttières parallèles séparées par une arête, et au moins une surface réfléchissante disposée transversalement ou longitudinalement par rapport aux gouttières et faisant un angle α non-nul avec la surface de la plateforme optique. Selon le procédé de fixation d'un composant optique non-transparent au rayonnement photonique sur la plateforme optique, le faisceau du rayonnement photonique est dirigé vers la surface réfléchissante selon un angle β non-nul par rapport à la surface de la plateforme optique.

## Description

### DOMAINE

La présente invention se rapporte au domaine des composants optiques hybrides intégrés sur une plateforme, notamment destinés à être utilisés dans les réseaux de télécommunications.

### ARRIERE PLAN

Les réseaux de télécommunications optiques ont un besoin croissant de fonctions optiques complexes qui impliquent l'utilisation de nombreux composants optiques passifs ou actifs réunis sur une plateforme optique commune. Cependant la fixation de ces composants optiques sur la plateforme optique par collage présente des difficultés.

Deux techniques sont principalement utilisées. Une première technique est basée sur l'utilisation de résines, telles que des résines époxy, nécessitant une polymérisation à chaud. Une seconde technique est basée sur l'utilisation de résines permettant une polymérisation à froid par rayonnement photonique. Cette seconde technique permet de procéder à un collage rapide in situ de plusieurs composants optiques simultanément.

Toutefois l'utilisation de cette seconde technique est limitée aux composants optiques transparents aux UV. L'intégration de fonctions optiques en espace libre à base de composants optiques passifs repose principalement sur cette seconde technique.

Dans le cas de fonctions optiques actives (laser, modulateurs, détecteurs ...), les composants optiques ne sont habituellement pas transparents aux UV. L'utilisation d'un substrat transparent aux UV devient alors obligatoire, ce qui engendre une contrainte forte, voire rédhibitoire, pour la majorité des composants optiques actifs. Les composants optiques actifs nécessitent d'utiliser des plateformes optiques ayant une bonne conduction thermique et de bonnes propriétés électriques, de manière à assurer leur compatibilité avec la réalisation de lignes hyperfréquences permettant la modulation de ces composants actifs.

Actuellement les composants optiques actifs sont reportés sur des substrats qui ne sont pas transparents aux UV. La solution généralement utilisée pour le collage des composants opaques aux UV sur une plateforme optique est d'utiliser des colles de type résines époxy polymérisables à chaud. Le traitement thermique comprend typiquement un cycle de température compris entre 100°C et 150°C pour une durée de 10mn à 30mn. Les colles polymérisables permettent un pré-positionnement (voire un repositionnement) des composants optiques avant polymérisation de la résine.

Le traitement thermique nécessite
- soit d'intégrer au niveau du banc d'assemblage un moyen de chauffage, ce qui est difficilement compatible avec les précisions recherchées du fait des dilatations thermiques qui en résultent ;
- soit de transférer la plateforme optique dans une étuve, ce qui entraîne d'une part des manipulations qui sont consommatrices de temps, toujours délicates à réaliser et très risquées du fait des désalignements qui peuvent en résulter, et d'autre part la déconnexion et la reconnexion des composants optiques actifs causant le désalignement de la fibre optique.

Cette technique est habituellement utilisée pour fixer différents composants optiques sur un même substrat, mais elle ne permet pas d'avoir la précision de positionnement (de l'ordre du µm, voire inférieure) qui est indispensable dans le cas du couplage optique entre composants optiques monomodes.

### RESUME

La fixation d'un composant optique non transparent au rayonnement photonique sur une plateforme optique opaque au rayonnement photonique par une technique de polymérisation à froid demeure donc un problème.

A cette fin, la solution proposée est la fixation d'un composant optique sur une plateforme optique réalisée à température ambiante, et qui ne nécessite pas de manipulation ou de déplacement de la plateforme optique.

L'objet de la présente invention est une plateforme optique non-transparente au rayonnement photonique ayant une surface destinée à supporter au moins un composant optique non-transparent au rayonnement photonique. Sa surface comporte au moins deux gouttières parallèles séparées par une arête, et au moins une surface réfléchissante disposée transversalement ou longitudinalement par rapport aux gouttières, et faisant un angle α non-nul avec la surface de la plateforme optique.

Une ou plusieurs surfaces réfléchissantes, comme des miroirs, sont associées à un jeu d'espaces, formant des sillons ou gouttières, et de reliefs, formant des arêtes entre les sillons, créés dans une plateforme optique. Ce dispositif peut être dupliqué localement sur la plateforme optique autant de fois que nécessaire en fonction de la complexité de la fonction optique à réaliser.

Selon un mode de réalisation préféré, la surface réfléchissante fait un angle α égal à 45°±30° avec la surface de la plateforme optique.

Selon un autre mode de réalisation préféré, la surface réfléchissante fait un angle α égal à 54,74° avec la surface de la plateforme optique.

La présente invention a aussi comme objet un procédé de fixation d'un composant optique non-transparent au rayonnement photonique sur une plateforme optique non-transparente au rayonnement photonique. Le faisceau du rayonnement photonique est dirigé vers la surface réfléchissante selon un angle β non-nul par rapport à la surface de la plateforme optique.

Selon un premier aspect, le procédé comprend les étapes suivantes :
- des gouttières parallèles séparés par des arêtes sont réalisés dans la surface d'un substrat, et
- une surface réfléchissante est disposée transversalement à au moins une extrémité des gouttières afin de former une plateforme optique, la surface réfléchissante faisant un angle α non-nul avec la surface de la plateforme optique,
- une colle photopolymérisable est placée dans les gouttières,
- un composant optique est placé sur la surface de la plateforme optique,
- un rayonnement photonique est envoyé vers la surface réfléchissante de la plateforme optique,
- le rayonnement photonique réfléchi par la surface réfléchissante provoque la polymérisation de la colle et la fixation du composant optique sur la plateforme optique.

Selon un deuxième aspect, le procédé comprend les étapes suivantes :
- deux gouttières parallèles séparés par une arête sont réalisées dans la surface d'un substrat, et
- une surface réfléchissante est disposée longitudinalement par rapport aux gouttières afin de former une plateforme optique, la surface réfléchissante faisant un angle α non-nul avec la surface de la plateforme optique,
- une colle photopolymérisable est placée dans les gouttières,
- un composant optique est placé sur la surface de la plateforme optique,
- un rayonnement photonique est envoyé vers la surface réfléchissante de la plateforme optique,
- le rayonnement photonique réfléchi par la surface réfléchissante provoque la polymérisation de la colle et la fixation du composant optique sur la plateforme optique.

Selon un autre aspect, la surface réfléchissante fait un angle α égal à 45°±30° avec la surface de la plateforme optique. Dans ce cas le faisceau du rayonnement photonique est dirigé vers la surface réfléchissante selon un angle β égal à 90°±30° par rapport à la surface de la plateforme.

De préférence les surfaces réfléchissantes sont inclinées à 45°±30° par rapport à la surface de la plateforme optique. L'insolation par un rayonnement photonique se fait alors perpendiculairement à la plateforme optique utilisée pour l'intégration. Ainsi, tous les composants optiques actifs et passifs sont positionnées précisément et fixés, partiellement ou complètement, par le procédé de fixation au rayonnement photonique les uns après les autres directement sur le banc d'assemblage.

De préférence encore les surfaces réfléchissantes sont inclinées de 54,74° par rapport à la surface de la plateforme optique. Cet angle particulier de 54,74° est obtenu par gravure anisotrope du silicium qui se bloque sur les plans cristallographiques (111), la plateforme optique étant un plan (100).

La présente invention a encore comme objet un système optique obtenue par le procédé décrit précédemment. Le système optique comporte une plateforme optique non-transparente au rayonnement photonique et au moins un composant optique non-transparent au rayonnement photonique.

L'invention s'applique à tout report et fixation de composant optique unitaire, actif ou passif, sur une plateforme optique. Elle s'applique également à toutes combinaisons de composants actifs et passifs reportées sur une plateforme optique unique afin de réaliser une fonction optique complexe. Un exemple non limitatif de ce mode de réalisation est l'intégration sur une plateforme optique unique d'un laser brasé sur un substrat et d'un modulateur brasé également sur son propre substrat.

### BREVE DESCRIPTION

D'autres caractéristiques et avantages apparaîtront à la lecture de la description qui suit d'un mode de réalisation, donné bien entendu à titre illustratif et non limitatif, et dans le dessin annexé sur lequel
- la figure 1 illustre une vue en perspective d'un mode de réalisation d'un système optique,
- la figure 2a illustre une vue en coupe d'une plateforme optique selon A-A de la figure 1,
- la figure 2b illustre une vue en coupe d'une plateforme optique selon B-B de la figure 1,
- la figure 3 illustre une vue de dessus d'un mode réalisation d'un circuit supportant plusieurs composants optiques.
- la figure 4 illustre une vue de dessus d'un autre mode réalisation d'un circuit supportant plusieurs composants optiques,
- la figure 5a illustre une vue de dessus et de côté d'une mode réalisation d'une plateforme optique pour un circuit supportant un composant optique,
- la figure 5b illustre une vue de dessus et de côté d'un circuit supportant un composant optique selon le mode réalisation de la figure 5a.

Sur ces figures, les éléments identiques portent les mêmes numéros de référence.

La terminologie directionnelle comme « gauche », « droite », « haut », « bas », « avant », « arrière », « dessus », « dessous », « vertical », « horizontal », etc... est utilisée en référence à l'orientation des figures ici décrites. Parce que les éléments composant les modes de réalisation de la présente invention peuvent être placés dans des orientations différentes, la terminologie directionnelle n'est utilisée ici qu'à des fins d'illustration et n'est nullement limitative.

### DESCRIPTION DETAILLEE

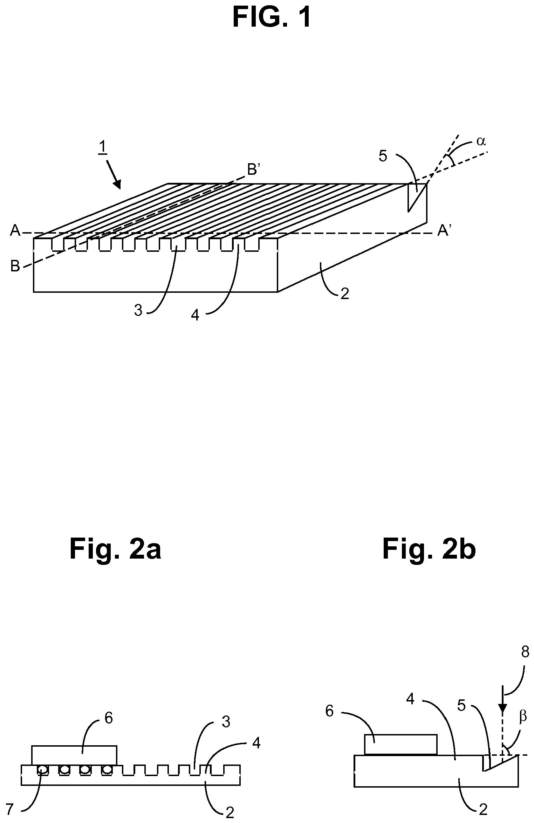

Dans le mode de réalisation illustré sur la figure 1, on a représenté une plateforme optique **1.** A la surface d'un substrat **2,** par exemple en silicium, est gravé au moins un sillon **3.** Selon un mode de réalisation préféré, plusieurs sillons **3** parallèles sont gravés, séparés entre eux par un relief **4** qui est constitué par le matériau non gravé du substrat **2.** Par la suite on désignera ce sillon par le terme « gouttière » **3** et ce relief par le terme « arête » **4** sans que cette appellation soit limitative.

Une surface réfléchissante **5** est placée transversalement à au moins une extrémité des gouttières **3.** Le substrat **2** portant des gouttières **3** séparées par une ou plusieurs arêtes **4** et au moins une surface réfléchissante **5** forme la plateforme optique **1.** La surface réfléchissante **5,** par exemple un miroir, fait un angle **α** non-nul avec le plan de la surface des arêtes **4.** De préférence l'angle **α** est égal à environ 45° par rapport à la surface de la plateforme optique **1.**

On peut aussi envisager de placer la surface réfléchissante directement sur l'outil de fabrication. Compte-tenu de zones d'ombres inévitables sur un tel outil, le rayonnement photonique n'est pas réparti de manière homogène dans ce cas et des zones de la plateforme optiques ne sont pas insolées. Cette solution est donc moins efficace mais peut permettre néanmoins une pré-fixation du composant optique nécessaire avant une étape ultérieure.

On considérera maintenant les figures 2a et 2b qui illustrent les étapes du procédé utilisé pour coller un composant optique **6** sur la plateforme optique **1.**

La plateforme optique **1** porte un composant optique **6.** La plateforme optique **1** comporte un substrat **2** formant des gouttières **3** séparées par une ou plusieurs arêtes **4** et au moins une surface réfléchissante **5** placée transversalement par rapport aux gouttières **3.** Dans les gouttières **3** disposées à l'emplacement où le composant optique **6** doit être fixé, on dépose la quantité nécessaire de colle **7** qui est une résine photopolymérisable à froid. Le rapport de la surface recouverte par la colle à la surface libre de colle au droit d'un composant optique à fixer est d'au moins 10%, de préférence de l'ordre de 50%. Pour une meilleure conduction thermique, il est préférable d'augmenter la surface de contact avec le support **2,** les colles photopolymérisables ayant habituellement une faible conduction thermique. Bien entendu le nombre et la position des gouttières **3** peuvent varier afin de s'adapter au plus près aux caractéristiques du dispositif à réaliser.

Le composant optique **6** est ensuite disposé à l'emplacement qui lui est destiné sur les arêtes **4.** Un rayonnement photonique **8,** par exemple un rayonnement UV, est envoyé sur la portion de la surface réfléchissante **5** située à l'extrémité des arêtes **4** supportant le composant optique **6.** Le rayonnement photonique **8** est envoyé selon un angle **β** par rapport au plan de la surface de la plateforme optique **1.** L'angle **β** est déterminé de manière à ce que la surface réfléchissante réfléchisse le rayonnement photonique **8** en direction des gouttières **3** contenant la colle **7** à polymériser. De préférence la surface réfléchissante **5** fait un angle **α** égal à 45°±30° par rapport au plan de la surface de la plateforme optique **1.** Par exemple, si la surface réfléchissante **5** fait un angle **α** égal à 45° avec le plan de la surface des arêtes **4,** de préférence l'angle **β** sera égal à 90° et le rayonnement photonique **8** sera réfléchi parallèlement à la surface des arêtes **4.** Ainsi le rayonnement photonique **8** atteindra la colle **7** et provoquera sa polymérisation.

Selon un autre mode de réalisation préféré, la surface réfléchissante fait un angle α égal à 54,74° avec la surface de la plateforme optique. Cet angle particulier de 54,74° est obtenu par gravure anisotrope du silicium qui se bloque sur les plans cristallographiques (111), la plateforme optique étant un plan (100).

Cette étape de collage peut constituer une étape de préfixation avant l'étape de fixation définitive. Les composants optiques sont alors fixés de manière à permettre la manipulation de la plateforme **1.** En utilisant une colle polymérisable par effet photosensible et thermique, la fixation complète peut alors être effectuée par une insolation plus poussée ou un traitement thermique, par exemple en étuve. Dans ce dernier cas, la préfixation réduit le risque de désalignement résultant des manipulations.

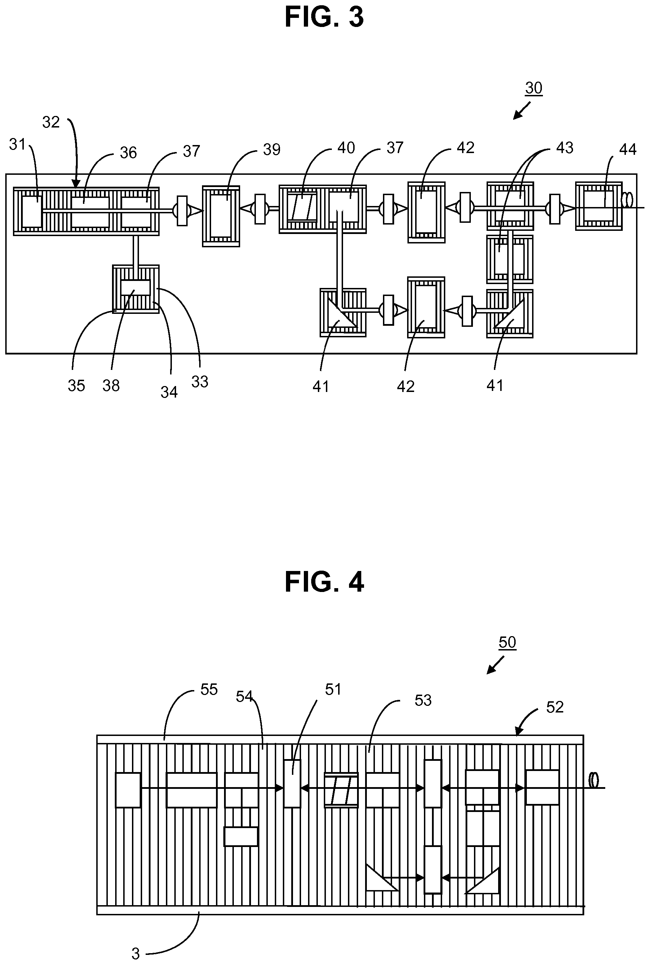

La figure 3 illustre une vue de dessus d'un circuit optique **30** portant plusieurs composants optiques **31.** Dans ce mode de réalisation, plusieurs plateforme optique **32** portent les composants optiques **31.** Chaque plateforme optique **32** comporte un substrat portant un ou plusieurs arêtes **33** séparés par des gouttières **34** et au moins une surface réfléchissante **35** située transversalement à une extrémité des gouttières **34.** Chaque composant optique **31** est fixé sur la plateforme optique **32** par photopolymérisation de la colle placée dans les gouttières **34,** comme décrit précédemment.

Les composants optiques peuvent être par exemple un filtre ITU **36,** un diviseur 50-50 **37,** une photodiode **38,** un laser accordable **39,** un isolateur **40,** un **prisme 41,** un modulateur **42,** un combineur PBS **43.** Une fibre optique **44** permet la sortie du signal.

La polymérisation se produisant sur une distance qui pourrait être limitée, il est préférable que le rayonnement photonique incident soit réfléchi vers toutes les surfaces accessibles de la colle. De préférence deux surfaces réfléchissantes **35** sont placées d'un côté et du côté opposé de la plateforme optique **32,** et un rayonnement photonique est envoyé sur chacune des surfaces réfléchissantes **35** de manière à initier la polymérisation de la colle à chaque extrémité des gouttières **34.**

La figure 4 illustre une vue de dessus d'un circuit optique **50** portant plusieurs composants optiques **51.** Dans cet autre mode de réalisation, Les composants optiques **51** sont tous fixés sur une plateforme optique unique **52.** La plateforme optique **52** comporte un substrat portant un ou plusieurs arêtes **53** séparées par des gouttières **54.** En outre deux surfaces réfléchissantes **55** sont placées transversalement aux extrémités des gouttières **54** d'un côté et du côté opposé de la plateforme optique **52.** Une seule étape d'insolation permet alors de fixer l'ensemble des composants optiques **51** sur la plateforme optique.

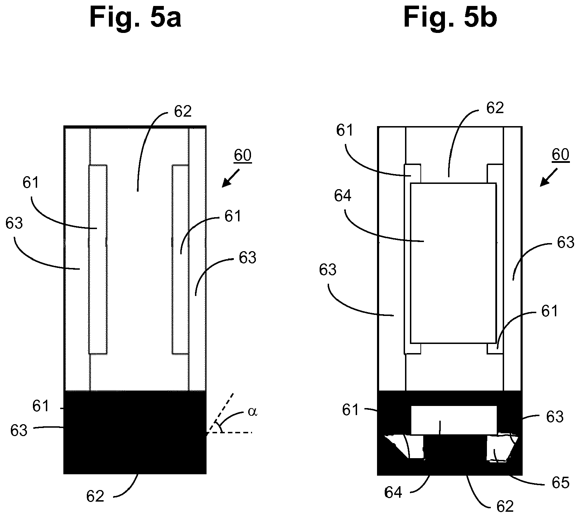

La figure 5a illustre encore un autre mode de réalisation d'une plateforme optique **60** vue de dessus et de côté. Dans ce mode de réalisation deux gouttières **61** parallèles sont gravées dans le substrat, de part et d'autre de la plateforme optique **60.** Elles sont séparées par une arête **62** constituée par le matériau non gravé du substrat. Deux surfaces réfléchissantes **63** sont disposées longitudinalement le long des gouttières **61** dont elles constituent respectivement la paroi externe. La surface réfléchissante **63,** par exemple un miroir, fait un angle **α** non-nul avec le plan de la surface de la plateforme optique **60.** De préférence l'angle **α** est égal à environ 45° par rapport à la surface de la plateforme optique **60.**

La figure 5b illustre, en vue de dessus et de côté, un circuit supportant un composant optique réalisé sur la plateforme de la figure 5a. Le composant optique **64** est disposé sur la plateforme optique **60** de manière à recouvrir au moins partiellement les gouttières **61.** Les surfaces réfléchissantes **63** ne doivent pas être masquées par le composant optique **64.** La quantité nécessaire de colle **65** est déposée dans les gouttières **61.** Un rayonnement photonique est envoyé sur la surface réfléchissante **63** selon un angle **β** par rapport au plan de la surface de la plateforme optique **60.** L'angle **β** est déterminé de manière à ce que la surface réfléchissante réfléchisse le rayonnement photonique en direction des gouttières **61** contenant la colle **65** à polymériser.

Selon un mode de réalisation, le circuit peut comporter plusieurs plateformes optiques **60** portant chacune un composant optique **64,** de manière analogue au mode de réalisation illustré sur la figure 3.

Bien entendu, la présente invention n'est pas limitée aux modes de réalisation décrits et représentés, mais elle est susceptible de nombreuses variantes accessibles à l'homme de l'art sans que l'on s'écarte de l'esprit de l'invention. En particulier, on pourra modifier le nombre, la position et l'espacement des arêtes et des gouttières, ainsi que des surfaces réfléchissantes.

## Revendications

1. Plateforme optique non-transparente au rayonnement photonique ayant une surface destinée à supporter au moins un composant optique non-transparent au rayonnement photonique, **caractérisée en ce que** sa surface comporte au moins deux gouttières parallèles séparées par une arête, et au moins une surface réfléchissante disposée transversalement ou longitudinalement par rapport aux gouttières et faisant un angle α non-nul avec la surface de la plateforme optique.

2. Plateforme optique selon la revendication 1, dans laquelle la surface réfléchissante fait un angle α égal à 45°±30° avec la surface de la plateforme optique.

3. Plateforme optique selon la revendication 1, dans laquelle la surface réfléchissante fait un angle α égal à 54,74° avec la surface de la plateforme optique.

4. Procédé de fixation d'un composant optique non-transparent au rayonnement photonique sur une plateforme optique non-transparente au rayonnement photonique selon l'une des revendications 1 à 3, **caractérisé en ce que** le faisceau du rayonnement photonique est dirigé vers la surface réfléchissante selon un angle β non-nul par rapport à la surface de la plateforme optique.

5. Procédé selon la revendication 4, comprenant
- des gouttières parallèles séparés par des arêtes sont réalisés dans la surface d'un substrat, et
- une surface réfléchissante est disposée transversalement à au moins une extrémité des gouttières afin de former une plateforme optique, la surface réfléchissante faisant un angle α non-nul avec la surface de la plateforme optique,
- une colle photopolymérisable est placée dans les gouttières,
- un composant optique est placé sur la surface de la plateforme optique,
- un rayonnement photonique est envoyé vers la surface réfléchissante de la plateforme optique,
- le rayonnement photonique réfléchi par la surface réfléchissante provoque la polymérisation de la colle et la fixation du composant optique sur la plateforme optique.

6. Procédé selon la revendication 4, comprenant
- deux gouttières parallèles séparés par une arête sont réalisées dans la surface d'un substrat, et
- une surface réfléchissante est disposée longitudinalement par rapport aux gouttières afin de former une plateforme optique, la surface réfléchissante faisant un angle α non-nul avec la surface de la plateforme optique,
- une colle photopolymérisable est placée dans les gouttières,
- un composant optique est placé sur la surface de la plateforme optique,
- un rayonnement photonique est envoyé vers la surface réfléchissante de la plateforme optique,
- le rayonnement photonique réfléchi par la surface réfléchissante provoque la polymérisation de la colle et la fixation du composant optique sur la plateforme optique.

7. Procédé selon l'une des revendications 4 à 6, dans lequel la surface réfléchissante fait un angle α égal à 54,74° avec la surface de la plateforme optique.

8. Procédé selon l'une des revendications 4 à 6, dans lequel la surface réfléchissante fait un angle α égal à 45°±30° avec la surface de la plateforme optique.

9. Procédé selon la revendication 8, dans lequel le faisceau du rayonnement photonique est dirigé vers la surface réfléchissante selon un angle β égal à 90°±30° par rapport à la surface de la plateforme.

10. Système optique obtenue par le procédé selon l'une des revendications 4 à 9, comportant une plateforme optique non-transparente au rayonnement photonique selon l'une des revendications 1 à 3 et au moins un composant optique non-transparent au rayonnement photonique.
